# EUROPEAN PATENT APPLICATION

(11) **EP 1 172 146 A2**
(43) Date of publication of application: **16.01.2002**
(21) Application number: 01116260.9
(22) Date of filing: 05.07.2001
(51) Int. Cl.: B01L 3/00, B01L 3/14, G01N 21/03, G01N 35/00

(54) **Cuvette control unit and controlling method using the same**

(30) Priority: 10.07.2000 JP 2000209021
(71) Applicant: KOWA COMPANY LTD., Nagoya-shi, Aichi-ken 460-0003 (JP)
(72) Inventor: Hirono, Taisuke, Tsukuba-shi Ibaraki-ken 305-0035 (JP); Ishikawa, Muneharu, Ibaraki-ken 301-0042 (JP)
(74) Representative: Bauer, Wulf, Dr.

(57) **Abstract**

On both end portions of bar code CA to be affixed on a cuvette, there are codes for controlling, start code S and stop code P which are codes for detecting end portions. Identification information INF of each cuvette is produced, regarding the codes for controlling as code for information, together with original code for information I. Then, many cuvettes can be controlled with one digit of code for infomation I.

## Description

### BACKGROUND OF THE INVENTION

This invention relates to a unit for controlling cuvettes to be used at the time of counting number of leukocyte mixed in blood products.

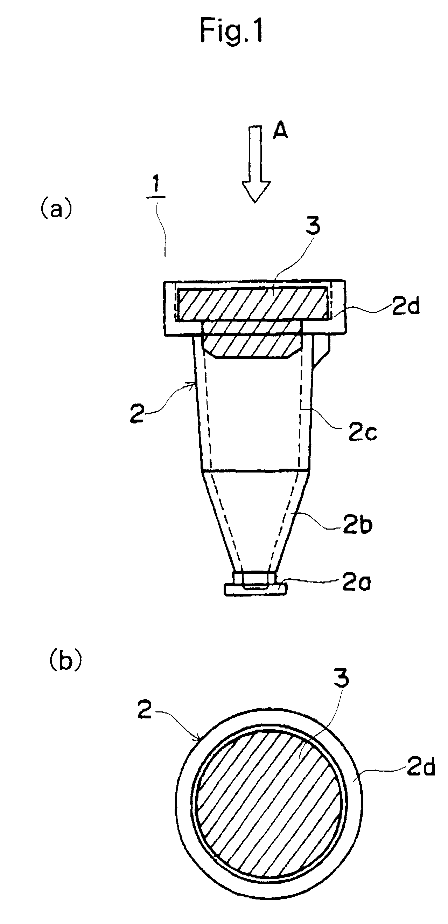

At the time of counting the number of leukocyte mixed in blood products, it is necessary to mix blood products and hemolysis · fluorescent dyeing reagent with each other so as to react in a conventional method. Fig.1 is a view for showing a cuvette (a container for measurement), (a) is a side view and (b) is a view seen from arrow A of (a). A cuvette 1, which is the container for inserting blood products and reagent therein, has a hollow main body 2 made of colorless, and transparent plastic and a colored lid 3 made of rubber, as shown in Fig.1. The main body 2 is open on the upper hand, and its opening portion is an installation portion 2d of the lid 3. The lid 3 is attachably and detachably installed on this installation portion 2d. On the lower side of the installation portion 2d of the main body 2, a body portion 2c in a cylindrical shape is formed on its center portion, and the side lower than the body portion 2c is a taper portion 2b. With the lower end of the taper portion 2b, a plate portion 2a is provided. The whole main body 2 and the plate portion 2a are formed so as to unit with each other, and the whole has a shape like a cone facing the lower. The lid 3 is inserted into the installation portion 2d, and the installation portion 2d is a cylindrical shape having the diameter bigger than one of the body portion 2c so as not to drop the lid 3 in the body portion 2c.

At the time of counting number of leukocyte mixed in blood products using the above-mentioned cuvettes 1, ninety six (96), for instance, of empty cuvettes 1 for exclusive use are taken out of a cuvette box, and ID number is entered on the main body 2 of all of the cuvettes 1 with a marking ink so as to identify. And, a unique ID number is affixed on blood products bag when blood is collected, and the blood products ID and the cuvette ID are corresponded to each other and the correspondence is entered in a note book or the like.

Subsequently, 100 µL of hemolysis · fluorescent dyeing reagent, for instance, is respectively added to the ninety six (96) cuvettes 1. Thereafter, 100 µL of the blood, for instance, is extracted from the blood products, and the extracted blood is added to the cuvette 1 which the reagent is in so as to mix and react. The above-mentioned operation is repeated for the ninety six cuvettes 1 in order. Thereafter, the cuvette 1 in which the reagent and the blood products are reacted is taken out so as to centrifuge. And, the cuvette 1 is taken out of the centrifugal so as to set on a micro-leukocytometer.

On this occasion, it is necessary to manually input the blood products ID in the micro-leukocytometer. In this machine, laser beams are exposed to the leukocyte staying on the lower hand of the cuvette 1, and the image is analyzed with a CCD camera or the like from the lower hand or the side hand so as to count the number of the leukocyte. The counted result is displayed, corresponding to the input blood products ID, and is printed or is stored in a memory medium.

In a conventional method of controlling cuvettes, it is necessary for a tester to enter ID number on the cuvettes 1 and to enter the correspondence between the cuvette ID and the blood products ID on another place. But, the enter of numbers is a close operation since the cuvette 1 is about 30mm in whole length and the maximum diameter is about 18mm, for instance, so it is small. Besides, ninety six (96) times of entry is necessary for one box, and ninety six (96) times of correspondence of ID number is also necessary. information, such as blood center, place where blood is collected, serial number is included in the blood products ID, and this ID is 10 digits number. As mentioned before, the blood products ID is manually input in a measuring instrument. There are some problems during the above-mentioned operation, for instance, there is a possibility of error operation, and a tester strongly feels mental and physical pain.

For these reasons, each cuvette 1 is controlled using bar code to be used for individual data control in another field. But, the cuvette 1 is small, as mentioned before. For this reason, the size of the place where bar code is affixed is limited. So, the problem wherein conventional bar code can not be affixed as it is exists.

Then, the object of the present invention is to provide a cuvette control unit capable of controlling cuvettes 1 with bar code even if the cuvette is small and the size of the place where bar code is affixed is limited.

### SUMMARY OF THE INVENTION

The invention of claim 1 is cuvette control unit for controlling cuvettes by reading a first bar code affixed on said cuvette, said first bar code being comprised of codes for controlling located on both end portions and code for information located between said codes for controlling, said cuvette control unit comprising:
a first reading means capable of reading said first bar code;
a cuvette identification information producing means for producing cuvette identification information corresponding to said cuvette on which said first bar code is affixed from said code for controlling and said code for information of said first bar code read by said first reading means; and
a memory means for storing said cuvette identification information produced by said cuvette identification information producing means, corresponding to said cuvette on which said first bar code is affixed.

According to the present invention relating to claim 1, the identification information of a cuvette is produced from codes for controlling located on both end portions of the first bar code and the code for information located between said codes for controlling, and the identification information of the cuvette is stored by the memory means, corresponding to the cuvette. Then, the capacity of the identification information of the cuvette can be increased according to the number of kinds of the codes for controlling with the same digits of code for information. Therefore, the capacity of the identification information for identifying the cuvettes can be sufficiently obtained even if one digit is decreased in comparison with the digits of code for information having a general bar code. That is, identification and control of cuvettes are possible with the bar code having smaller digits than a general bar code.

The invention of claim 2 is the cuvette control unit as set forth in claim 1, wherein said cuvette identification information producing means produces said cuvette identification information corresponding to said cuvette on which said first bar code is affixed from start code of said codes for controlling and said code for information.

According to the present invention relating to claim 2, the identification information is produced from the start code of the codes for controlling and the code for information of the first bar code such that the capacity of the identification information of the bar code, wherein digit of the code for information is the same, can be increased according to the number of kinds of the start code, and more cuvettes than a general bar code can be identified and controlled.

The invention of claim 3 is the cuvette control unit as set forth in claim 1, wherein said cuvette identification information producing means produces said cuvette identification information corresponding to said cuvette on which said first bar code is affixed from stop code of said codes for controlling and said code for information.

According to the present invention relating to claim 3, the identification information is produced from the stop code of the codes for controlling and the code for information of the first bar code such that the capacity of the identification information of the bar code, wherein digit of the code for information is the same, can be increased according to the number of kinds of the stop code, and more cuvettes than a general bar code can be identified and controlled.

The invention of claim 4 is the cuvette control unit as set forth in claim 1, wherein said cuvette identification information producing means produces said cuvette identification information corresponding to said cuvette on which said first bar code is affixed from start code of said codes for controlling and stop code of said codes for controlling and said code for information.

According to the present invention relating to claim 4, the identification information is produced from the start code and the stop code of the codes for controlling and the code for information of the first bar code such that the capacity of the identification information of the bar code, wherein digit of the code for information is the same, can be increased according to the number of kinds of the start code and the stop code, and further more cuvettes than a general bar code can be identified and controlled. For instance, ninety six (96) cuvettes, which are generally used, can be identified and controlled even with one digit of code for information.

The invention of claim 5 is the cuvette control unit as set forth in claim 1, wherein said first bar code is comprised of said codes for controlling comprised of start code and stop code, one digit of said code for information and one digit of code for inspection.

According to the present invention relating to claim 5, the cuvettes can be identified and controlled with four digits of bar code since the cuvette identification information can be obtained by the first bar code comprised of codes for controlling comprised of the start code and the stop code, one digit of code for information and one digit of code for inspection. Then, the bar code can be affixed to the cuvette wherein the size of the bar code label to be affixed is limited, so the cuvettes can be identified and controlled.

The invention of claim 6 is the cuvette control unit as set forth in claims 1 through 5 for controlling a plurality of said cuvettes stored in a cuvette box on which a second bar code is affixed, wherein a second reading means capable of reading said second bar code is provided, a cuvette box identification information producing means for producing cuvette box identification information corresponding to said cuvette box, on which said second bar code is affixed, from said second bar code read by said second reading means is provided, and a storing control means for storing said cuvette identification information corresponding to said cuvette stored in said cuvette box, on which said second bar code is affixed, read by said second reading means, produced by said cuvette identification information producing means, and said cuvette box identification information produced by said cuvette box identification information producing means, corresponding to each other in said memory means is provided.

According to the present invention relating to claim 6, the identification information can be further increased since the second bar code in which the cuvette box identification information is entered is affixed on the cuvette box storing a plurality of cuvettes, and the read cuvette identification information and the read cuvette box identification information are stored in the memory means, corresponding to each other. Then, the number capable of identifying cuvettes is further increased, and the identification of each cuvette can be made perfect.

The invention of claim 7 is controlling method, comprising:
storing corresponding relation information between blood products information obtained by a third bar code affixed on a blood products storing means storing blood products and said cuvette identification information of said first bar code affixed on said cuvette obtained by said cuvette control unit as set forth in claims 1 through 6 in said memory means, when said blood products is processed using said cuvettes; and
controlling said blood products by said cuvette identification information.

According to the present invention relating to claim 7, blood products can be controlled on the basis of the cuvette identification information in a measurement operation since the corresponding relation information between the blood products information by the third bar code affixed on the blood products storing means and the cuvette identification information is stored in the memory means so as to control blood products by the cuvette identification information.

### BRIEF DESCRIPTION OF THE DRAWINGS

Fig.1 is a view for showing a cuvette according to the present invention, (a) is a side view, and (b) is a view seen from arrow A of (a);
Fig.2 is a view for showing an example of a position on which bar code label is affixed according to the present invention, (a) is the bar code label of a cuvette, (b) is the bar code label of cuvette box, and (c) is the bar code label of blood products bag;
Fig.3 is a view for showing an example of a cuvette control unit according to the present invention;
Fig.4 is a conceptual view for showing an example of a structure for using bar code;
Fig.5 is a view for showing ID corresponding table (ID corresponding list) for registering cuvette ID and the like;
Fig.6 is a flowchart for showing an example of process contents of control program set in a computer;
Fig.7 is a flowchart for showing an example of process contents of subroutine for searching ID corresponding table;
Fig.8 is a flowchart for showing an example of process contents of command selection subroutine;
Fig.9 is a flowchart for showing an example of process contents of another command subroutine 1;
Fig.10 is a view for showing an example of the bar code label, (a) is a general bar code label of ID in cuvette box, (b) is a bar code label of ID in cuvette box of the present embodiment and (c) is a bar code label of cuvette box ID;
Fig.11 is a view for showing an example of a structure of the bar code, (a) is a code of ID in cuvette box and (b) is a code of cuvette box ID.
Fig.12 is an explanation view for comparing the bar code label in straightened state and the bar code label in the state of being affixed on the cuvette with each other, (a) is a top view and (b) is a view seen from arrow B of (a);
Fig.13 is a block view for showing an example of a structure of the cuvette control unit according to the present invention; and
Fig.14 is a view for showing using example when the contents of code corresponding to the identification information INF of ID in cuvette box are entered with start code S, data code I and stop code P.

### DESCRIPTION OF THE PREFERRED EMBODIMENTS

Embodiments of the present invention will now be explained hereinafter, referring to drawings.

A cuvette 1 is a conventional one, and is the same as one explained in "BACKGROUND OF THE INVENTION". So, its explanation is omitted (see Fig.1).

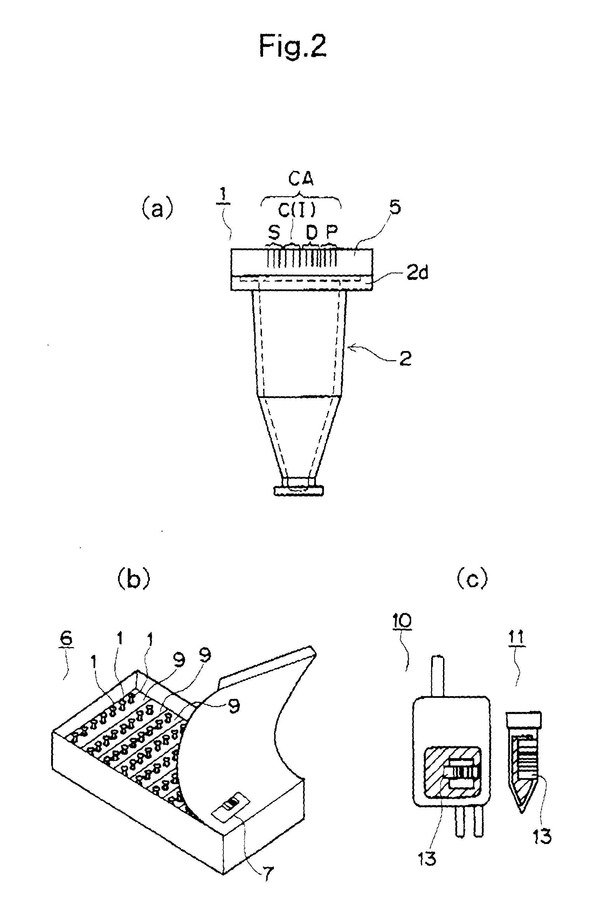

Fig.2(a) is a view for showing an example of a position of a first bar code 5 ("bar code label" hereinafter) to be affixed on the cuvette 1. The bar code label 5 is affixed so as to wind on an outer periphery of the installation portion 2d of the lid having maximum diameter in the cuvette main body 2.

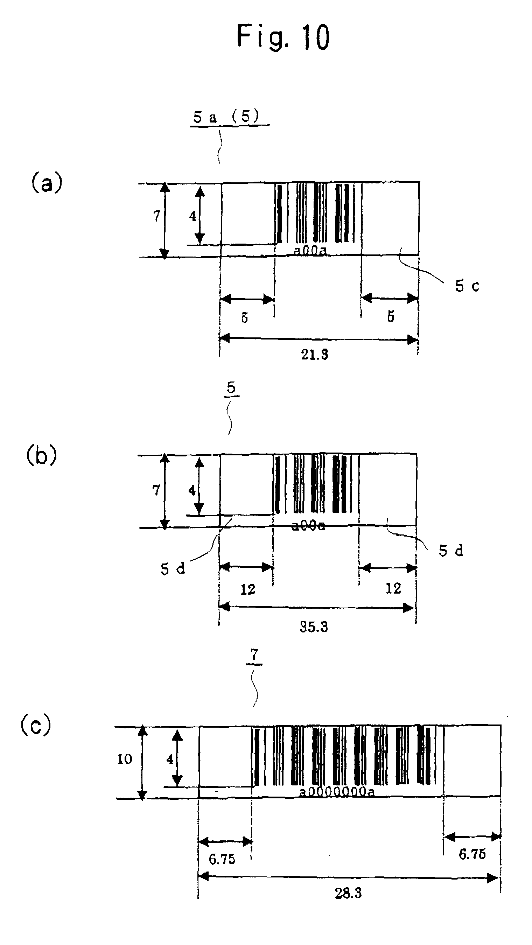

Fig.10(a) and (b) are views for each showing an example of the bar code label 5 (numeric value in the figure shows dimension, and its unit is mm). The place for affixing the bar code label 5 on the cuvette 1 is limited since the cuvette 1 is small in size.

The bar code label 5 is affixed on the outer periphery portion of the installation portion 2d of the upper lid having maximum diameter since the contents can not be seen if it is affixed on the body portion 2c of the cuvette 1 (see Figs.1 and 2). Therefore, it is inevitable to make the label small, as a bar code label 5a as shown in Fig.10(a).

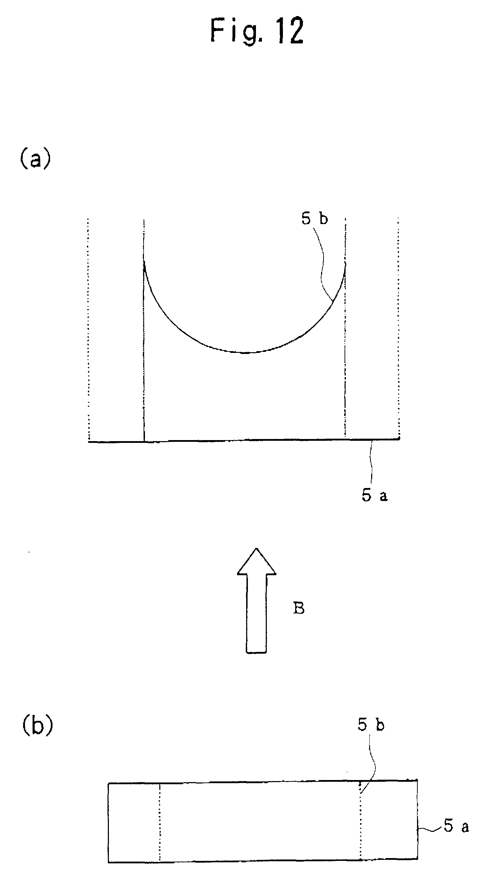

Fig.12 is a view for explaining contrast between the bar code label in straightened state and the bar code label affixed on the cuvette, (a) is plane view and (b) is a view seen from arrow B of (a). The installation portion 2d of the lid of the cuvette 1 is a circular shape seen from plane, as shown in Fig.1(b). If a general bar code label 5a of Fig.10(a) is affixed on the installation portion 2d of the lid and a bar code label 5b affixed on a circle projected on a plane is seen from the side in the direction as shown by the arrow A, it is made small in right and left direction as shown in Fig.12 in comparison with the straight bar code label 5a. For this reason, effective reading quantity with respect to margin portions 5c of right and left of the bar code label 5a is decreased, and then, it is difficult to read the bar code label 5a for a bar code reader 14.

Then, as shown in Fig.10(b), margin portions 5d of 12mm are provided with the bar code label 5 so that the label has a size longer than half of the round of the installation portion 2d of the lid (the longest if it is seen from the side) by making the margin portion 5c of 5mm in general case longer. By doing so, the bar code label 5a can be easily read when it is read with the bar code reader 14.

Fig.2(b) is a view for showing an example of a position of a second bar code ("bar code label" hereinafter) 7 which is affixed on a cuvette box 6, and Fig.10(c) is a view for showing an example of the bar code label 7. In the cuvette box 6 made with corrugated cardboard box or the like, twelve (12) rows of cuvette stands 9 are entered. On each cuvette stand 9, eight (6) cuvettes 1 are put in a row. Then, twelve (12) rows × eight (8)=ninety six (96) of cuvettes 1 are entered in the cuvette box 6. The bar code label 7 is affixed on the outside, the upper portion or the outer periphery portion of the cuvette box 6.

Fig.2(c) is a view for showing an example of a position of third bar code ("bar code label" hereinafter) 13 affixed on a blood products bag 10 (bag shape) or 11 (bottle shape) . The bar code label 13 is affixed on the surface of the blood products bag 10 or 11.

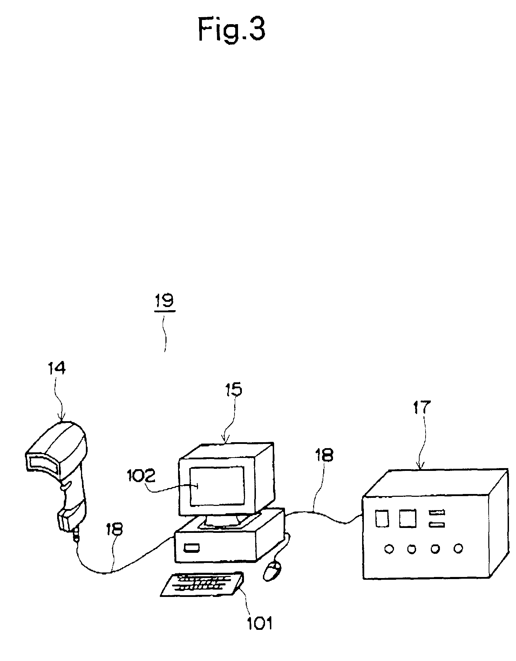

Fig.3 is a view for showing an example of a cuvette control unit 19 according to the present invention. The cuvette control unit 19 has reading means ("bar code reader" hereinafter) 14, which is a known electronic equipment, a micro-leukocytometer 17 and a computer 15, as shown in Fig.3. The bar code reader 14 and the micro-leukocytometer 17 are connected with the computer 15 via connection cables 18, 18. On this occasion, the first reading means and the second reading means use the same bar code reader in the present embodiment. But, a plurality of bar code readers may be used.

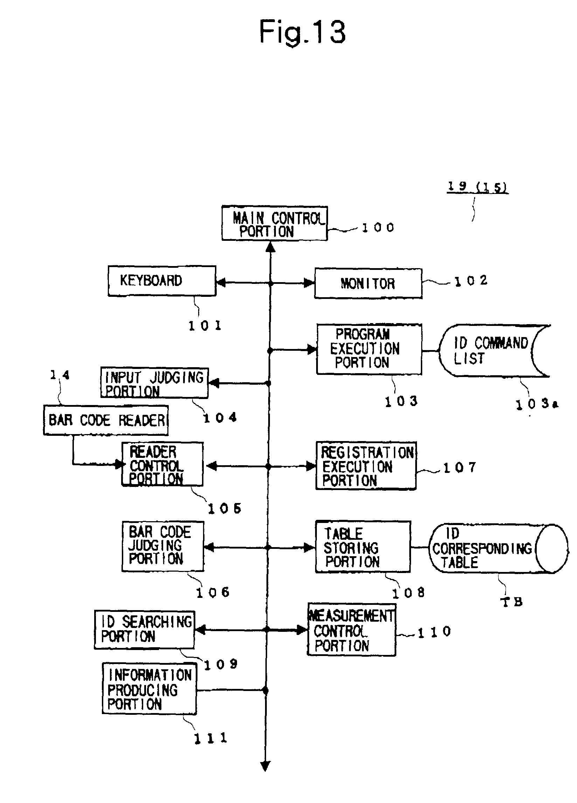

Fig.13 is a block diagram for showing an example of a structure in the computer of the cuvette control unit. As shown in Fig.13, a main control portion 100 is provided with the computer 15. With the main control portion 100, a keyboard 101, a monitor 102, a program execution portion 103, an input judging portion 104, a reader control portion 105, a bar code judging portion 106, a registration execution portion 107, a table storing portion 108, an ID searching portion 109, a measurement control portion 110, an information producing portion 111 are provided. An ID command list 103a is held by the program execution portion 103. Besides, an ID corresponding table (ID corresponding list) TB is stored in the table storing portion 108, and the bar code reader 14 is connected with the reader control portion 105 being free to control.

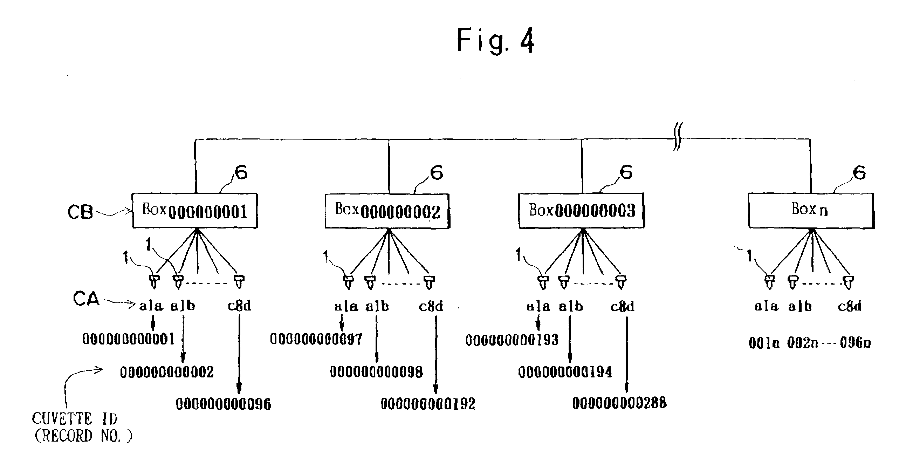

Fig.4 is a conceptual view for showing an example of a structure for using the bar code. As mentioned before, the bar code label 7 is affixed on the cuvette box 6, and the bar code label 5 is affixed to the cuvette 1. Bar code CA capable of becoming ninety six (96) kinds of values, equal to the number of the cuvettes 1 to be entered in one cuvette box 6 is shown on the bar code label 5 to be affixed on each cuvette 1. This value of the bar code CA is for indentifing each cuvette 1 in each cuvette box 6, and is named "ID in cuvette box", and is the value, such as "a1a", "a1b", ... "c8d", for instance, as shown in Fig.4. Bar code CB capable of becoming n (or more) kinds of values, the same as the total number (number is n) of the cuvette boxes 6 to be used is shown on the bar code label 7 to be affixed on the cuvette box 6. This value of the bar code CB is for indentifing each cuvette box, and is named "cuvette box ID", and is the value, such as "000000001", "000000002", "000000003"..."n", for instance, as shown in Fig.4. That is, ninety six (96) (the cuvettes in each box) × n (total number of boxes) = 96 · n of cuvettes can be indentified by combining the bar codes CA and CB with each other in stories as shown in Fig.4. On this occasion, unique data combined the ID in cuvette box (the bar code CA) and the cuvette box ID (the bar code CB) with each other for identifying 96 · n of cuvettes 1 is made CUVETTE ID (corresponding to record No. in the table mentioned hereinafter) . The value of the bar code shown on the bar code 13 of the blood products bag 10, 11 is its blood products information ("products ID" hereinafter).

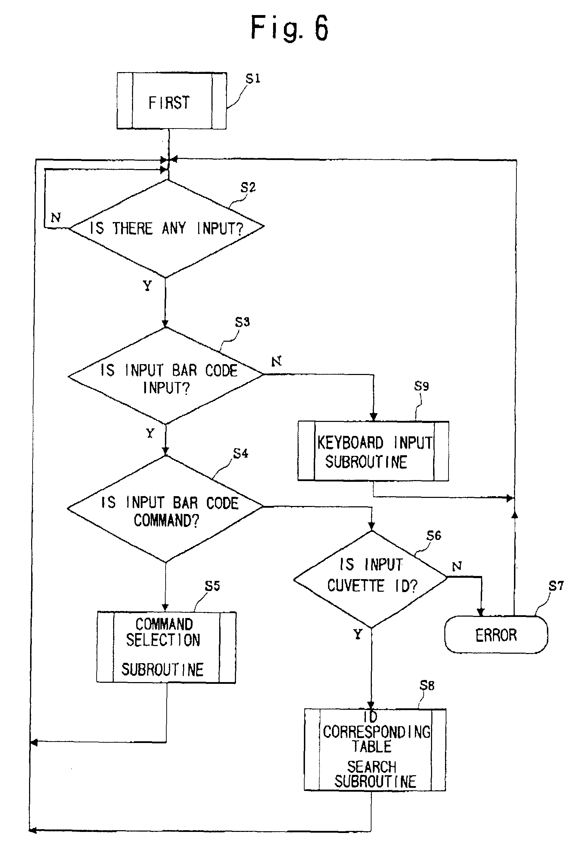

With this structure, an operation is executed as follows. Fig.6 is a flowchart for showing an example of the process contents of the control program set in the computer 15.

A tester inputs start command of the control program through the keyboard 101 of the computer 15 and the like. This start command is transferred to the main control portion 100. Receiving this, the main control portion 100 instructs the program execution portion 103 to execute the control program. By doing so, the program execution portion 103 starts the control program (see Fig.13). At the time of start, predetermined initial process routine, such as initialization of parameter, (shown with "FIRST" in Fig.6) is executed (step S1).

### <Registration of cuvette ID>

At first, cuvette ID is registered. That is, a tester gets the bar code reader 14 to read predetermined bar code (not shown) (bar code for registration comannd). The read information is input by the reader control portion 105. On the other hand, the input judging portion 104 judges whether or not there is any input of information (step S2). When there is the input of information, as to whether or not this information is by bar code input is judged (step S3). In this case, this is bar code input, so the program enters in step S4 via step S2 and step S3 of Fig.6.

That is, the bar code judging portion 106 judges as to whether or not the information input by bar code input is the bar code command (step S4). As mentioned before, predetermined bar code (bar code for command) was read by the bar code reader 14. Then, the bar code judging portion 106 judges this is the bar code command. Receving the judged result, the program execution portion 103 executes command selection sub-routine (step S5).

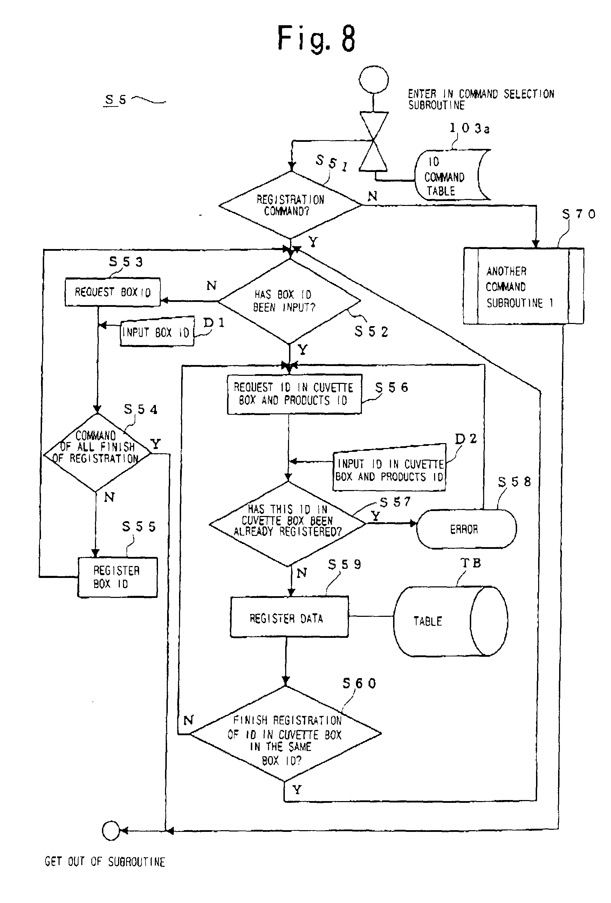

Fig.8 is a flowchart for showing an example of the process contents of the command selection sub-routine. The bar code judging portion 106 judges whether or not the information judged as the bar code command is registered command by referring the ID command list 103a holding in the program execution portion 103 in advance (step S51). In this case, this was registered command, then, the bar code judging portion 106 judges this is the registration command, and the program proceeds with the following step S52.

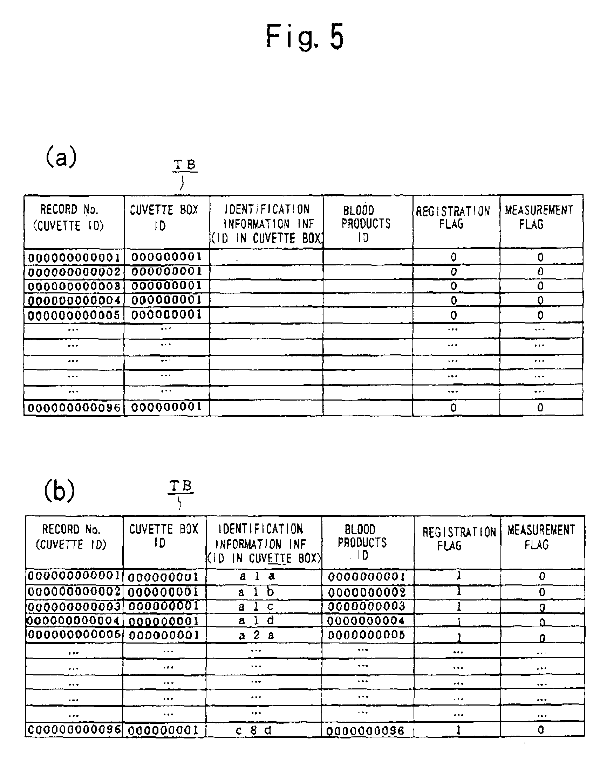

Fig.5 is a view for showing ID corresponding table for registering cuvette ID and the like. That is, the registration execution portion 107 calls the table TB as shown in Fig.5(a) stored in the table storing portion 108, and judges the possibility of inputting record to the table TB. In the present embodiment, an input pointer (not shown) is produced in the table TB by receiving the value of cuvette box ID. Therefore, the judgement as to whether or not the above-mentioned record can be input is done as the judgement as to whether or not cuvette box ID is input (step S52).

When the judgement that cuvette box ID has not been input due to just after registration start is done, the registration execution portion 107 outputs request of inputting cuvette box ID (step S53). This request is executed by displaying message through the monitor 102, for instance. Responding to this request, a tester gets the bar code reader 14 to read the bar code label 7 of the cuvette box 6 (when all registration finishes, a command of registration finish is read and input in place of reading the bar code label 7 of the cuvette box 6 at this time). The program enters in step S55 since the command of finish of all registration is not input at step S54.

That is, the read information is input through the reader control portion 105, and the input information is stored in a predetermined field of the table TB of the table storing portion 108 by the registration execution portion 107 as cuvette box ID (step S55). In Fig.5(a), for instance, the cuvette box ID which is "000000001" is stored in the item of "cuvette box ID" of the table TB.

When the cuvette box ID is thus input, the program enters in step S52 again, as shown in Fig.8, and the judgement the cuvette box ID is input is done. Then, the registration execution portion 107 requests to input ID in cuvette box and products ID (step S56). This request is done by displaying message through the monitor 102, for instance. On the other hand, at this time, hemolysis · fluorescent dyeing reagent has been injected into each cuvette 1. Furthermore, the blood extracted from blood products is entered in each cuvette 1 so as to mix. That is, ID in cuvette box and products ID are input at this mixing time of the blood.

A tester gets the bar code reader 14 to read the bar code label 5 of the cuvette 1, and to read the bar code label 13 of the blood products bags 10, 11 of the blood products to be mixed in the cuvette 1. The read information is input through the reader control portion 105. Of the bar code input, the bar code CA of the bar code label 5 of the cuvette 1 is input in the information producing portion 111.

Producing of information in the information producing portion 111 will now be explained hereinafter.

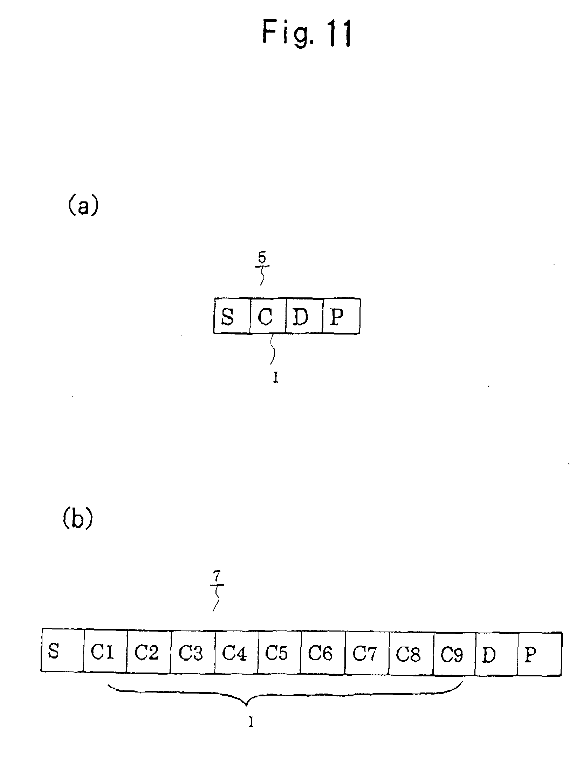

Fig.11 is a view for showing an example of a structure of the code of the bar code label 5 or 7. The character S in the figure shows start code (four signals a, b, c, d), and C, C1 through C9 show data code (signal is 0 through 9), D shows check digit (signal is determined by calculation), P shows stop code (four signals, a, b, c, d), and the part shown by I is one of data code, and one shown information contents. Ninety six (96) kinds of codes should be prepaired for the bar code label 5 to be affixed on the cuvette 1 since ninety six (96) cuvettes 1 are in one cuvette box 6.

Three kinds of codes, start code S, check digit D and stop code P are generally necessary for bar code, in addition to data code I showing information contents. Since capacity of ninety six (96) kinds or more is necessary for data code, 2 digits (characters) (10 × 10 = 100 kinds) with decimal number are necessary at the minimum. Then, the bar code has five (5) digits of code if the bar code label 5 is produced as usual. But, the bar code having five (5) digits (characters) of code can not be affixed since the place for affixing the bar code label 5 of each cuvette 1 is small. Then, the bar code label 5 having total four (4) digits (characters) 1 of bar code, with only one (1) digit of data code is affixed on each cuvette 1, and cuvette identification information for identifying ninety six (96) of cuvettes 1 is produced by the information producing portion 111 from the total four digits of bar code. That is, information is produced as follows.

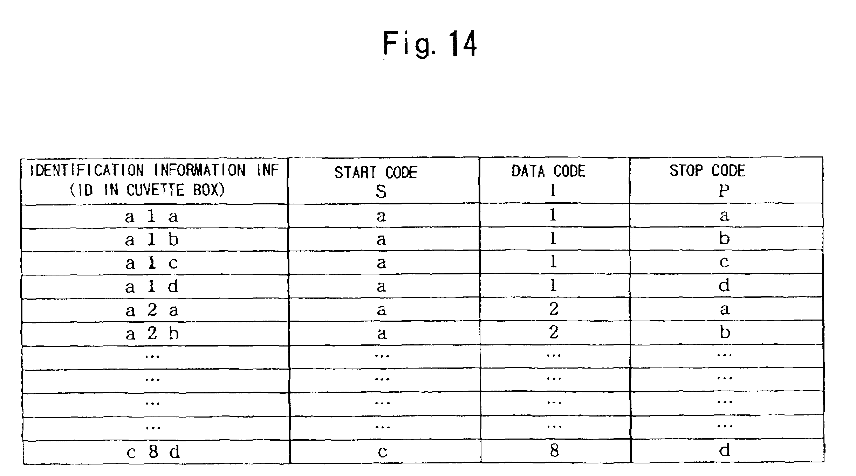

Fig.14 is a view for showing usage example when the contents of the code corresponding to cuvette identification information INF of ID in cuvette box is shown with start code S, data code I, stop code P. If the start code of first line digit of the bar code label 5 affixed on the cuvette 1 read by the bar code reader 14 is "a", the data code is "1" and the stop code is "a", for instance, as shown in Fig.14, the information producing portion regards the start code "a" and the stop code "a" as data code in addition to the data code "1" so as to produce the identification information "ala" from these three (3) digits code. If the start code of the bar code of the cuvette 1 subsequently read is "a", the data code is "1" and the stop code is "b", the information producing portion 111 produces "a1b". And so forth, the cuvette identification information INF comprised of three (3) digits (characters) of data code is produced from four (4) digits (characters) of bar code shown on the bar code label 5 concerning ninety six (96) of cuvettes 1, regarding start code and stop code as data code. The cuvette identification information INF concerning each cuvette 1 is thus produced as shown in Fig.14.

That is, start/stop can be detected if optional one digit (character) of "a" through "d" is used for start code S and stop code P. So, four kinds of start code "a" through "d" and four kinds of stop code "a" through "d" are also used as data code, thereby the capacity can be increased up to 4 × 10 × 4 = 160 kinds with the same four digits (characters) of bar code if actual data code I has one digit (character) (In the present embodiment, the capacity more than 96 kinds is not necessary, so the capacity is made 4 × 8 × 4 = 128 kinds using the numerals "1" through "8" for data code I).

As mentioned before, the code of the bar code label 5 can be changed into four digits (characters) from five digits (characters) by producing information using start code and stop code as data code. Then, one digit can be decreased, more cuvettes 1 capable of identifying by bar code can be prepared, and the bar code label can be affixed to a limited place, such as the cuvette 1.

As shown in Fig.11(b), the bar code label 7 of cuvette box ID is used as a general way since the size is not limited, as mentioned before, then twelve (12) digits of bar code label in which nine (9) digits are data code is used. By doing so, the code of bar code label 7 can have the capacity of 10⁹ kinds (cuvette box identification information).

That is, the capacity of the cuvette ID is the kinds of 128×10⁹ in total, and the same number of cuvettes 1 can be measured by the present cuvette control unit 19. As mentioned above, the capacity of the bar code CA of ID in cuvette box is possible up to 160 (one hundred and sixty) kinds by producing the cuvette identification information INF, and no specific limit is for the cuvette box identification information INF whcih is the capacity of the bar code CB of the cuvette box ID. Then, easy dealing is possible even if the number of the cuvettes to be processed is increased later.

As mentioned above, the information producing portion 111 produces the cuvette identification information INF from the start code S, the stop code P and the information code I of the bar code CA (the bar code CA input by the bar code reader 14 is input in the information producing portion 111 so as to produce it as the cuvette identification information INF, hereinafter) so as to input in the registration execution portion 107. The registration execution portion 107 refers to the table TB of the table storing portion. 108 (concerning the record having cuvette box ID which input is judged at step S52 just before) and judges as to whether or not the ID in cuvette box shown by the input cuvette identification information INF has been already registered (step S57). If already registered, error processing is performed since it is the registration to the same cuvette (step S58) and error message or the like is displayed through the monitor 102 or the like. If no registration is judged in step S57, the registration execution portion 107 stores ID in cuvette box (cuvette identification information INF) and product ID in respectively predetermined fields in the records wherein input pointer is produced in table TB (step S59). At the same time, registration flag of record is made "1" which shows "already registered" (Not yet registered is made "0".). In Fig.5(b), for instance, in the first record of table TB, the cuvette identification information INF (ID in cuvette box)"a1a" is stored in the item of "ID in cuvette box", the products ID "0000000001" is stored in the item of "products ID" and "1" is stored in the item of "registration flag", respectively.

The values have been thus registered in the fields of cuvette box ID, ID in cuvette box and products ID in one record. As shown in Fig.5(b), the key item for identifying respective records, which is also record No. is cuvette ID. That is, registration of one cuvette ID finishes.

Subsequently, the registration execution portion 107 judges as to whether or not the registration of ID in cuvette box in the same cuvette box 6 has been finished on the basis of input by the bar code reader 14 or the keyboard 101 (step S60). If not finished, the program returns to step S56, again. By repeating above-mentioned steps S56 through S60 in order, the cuvettes 1 of the same cuvette box 6 are registered in order. When the program returns to step S56 from step S60, the input pointer in table TB is moved to the record one line under (see Fig.5), and the same value as one of the above line of record is input in the cuvette box ID in the record.

When registration thus finishes to all of ninety six (96) of cuvettes 1 in the same cuvette box 6 and the program proceeds with step S60, finish of registration of ID in cuvette box is judged on the basis of the input by the bar code reader 14 or the keyboard 101. Then, the program returns to step S52, again, and all of n of cuvette boxes 6 is registered by repeating the above-mentioned steps S52 through S60 in order.

As mentioned above, the registration of n×96= 96 · n of cuvette ID is all finished. In the state that registration all finished, the command of registration finish is read and input in place of reading the bar code of the cuvette box 6 (operation input D1). The input of all registration finish command is judged in step S54, the program gets out of subroutine for command selection. When step S6 is thus finished, the program returns to step S2, again.

### <Measurement>

As mentioned above, n × 96 = 96 · n of cuvettes 1 wherein registration of cuvette ID is finished are centrifuged, and the measurement of these cuvettes 1 is executed via the micro-leukocytometer 17 in the following way.

### [①Input of products ID]

A tester gets the bar code reader 14 to read the bar code label 7 of the cuvette box 6 and the bar code label 5 of one cuvette 1 of the cuvette box 6.

Then, the input judging portion 104 judges that information is input (step S2), as shown in Fig.6, and judges that the information is bar code input (step S3). The bar code judging portion 106 judges that the information input by bar code input is not bar code command (step S4), and that this is cuvette ID (it means combination of cuvette box ID and ID in cuvette box in this case) (step S6). And, the program proceeds with step S8 which is the subroutine for searching ID corresponding table. When no cuvette ID is judged in step S6, error processing is performed (step S7), and the program returns to step S2, again.

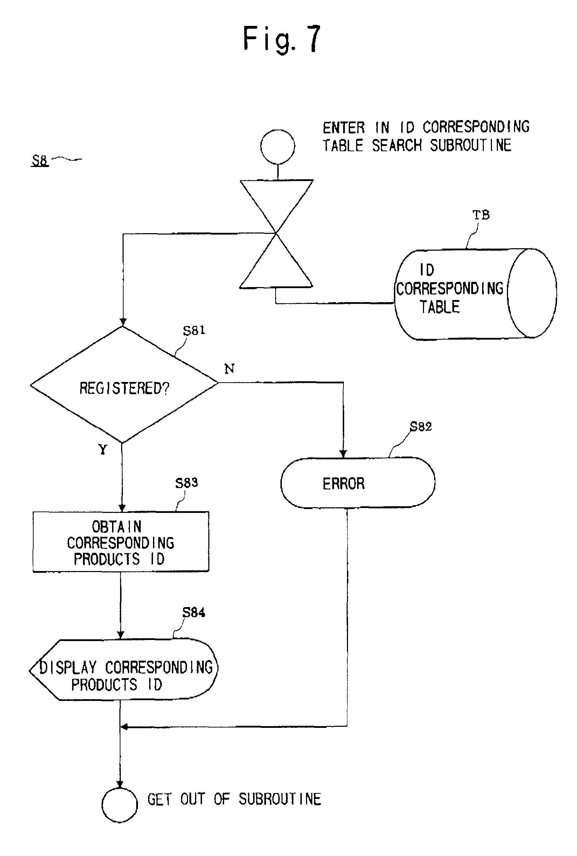

Fig.7 is a flowchart for showing an example of process contents of subroutine for searching ID corresponding table. When the program enters into subroutine for searching ID corresponding table of step S8, the main control portion 100 instructs the ID searching portion 109 to search ID. Receiving this, the ID searching portion 109 searches table TB with the cuvette ID (the combination of cuvette box ID and ID in cuvette box) judged in step S6 as a key, and judges as to whether or not the record having the corresponding cuvette ID exists, that is, as to whether or not the cuvette ID has been registered (step S81). When the judgement is that no corresponding record exists, and that no cuvette ID is registered, error processing is performed (step S82), and the program gets out of the subroutine so as to return to step S2, as shown in Fig.6.

When the record having the corresponding cuvette ID is searched in the table TB in step S81, the judgement is that the cuvette ID has been registered so as to obtain the products ID included in the record searched (step S83). The obtained products ID is displayed on the monitor 102 or the like (step S84). Watching this display, an operator confirms the products ID. At the same time, the products ID obtained in step S83 is directly transferred to the micro-leukocytometer 17 through the connection cable 18 in addition to displaying on the monitor 102 so as to input.

When the products ID is thus obtained so as to input in the micro-leukocytometer 17, the program gets out of the subroutine for searching ID corresponding table so as to return to Step S2, as shown in Fig.6.

On this occasion, the products ID can be manually input through the keyboard 101 or the like. When the products ID is manually input through the key board 101 or the like, for instance, the input judging portion 104 judges that the information is input (step S2), and judges that the information is not bar code input (step S3), as shown in Fig. 6. And, the products ID input by an appropriate keyboard input subroutine (step S9) is transferred to the micro-leukocytometer 17 as it is so as to input.

### [② Measurement with machine]

After the products ID concerning the cuvette 1 to be measured is input in the micro-leukocytometer 17, a tester gets the bar code reader 14 to read a predetermined bar code (the bar code for measurement command) (not shown). As shown in Fig.6, the input judging portion 104 judges that information is input (step S2) and judges that the information is the bar code input (step S3). The bar code judging portion 106 judges that the information input by bar code input is bar code command (step S4), and executes the command selection subroutine (step S5).

As shown in Fig.8, in the command selection subroutine, the input command is not registration command, but measurement command, so the judgement is that it is not registration command (step S51), and another command subroutine 1 is executed (step S70).

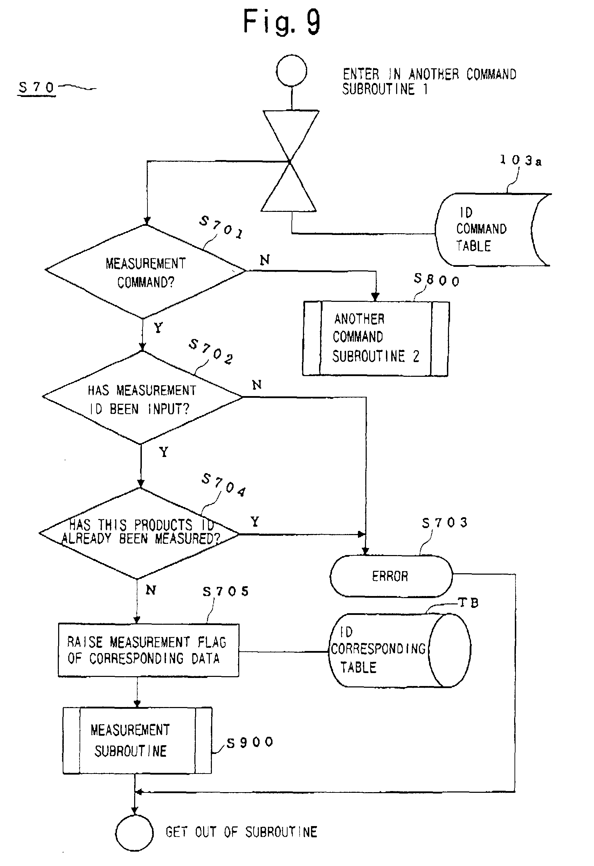

Fig.9 is a flowchart for showing an example of process contents of another command subroutine 1. The bar code judging portion 106 judges as to whether or not the information judged that it is not registration command is measurement command by referring to the ID command table 103a held in advance by the program execution portion 103 (step S701). In this case, it is measurement command. So, the bar code judging portion 106 judges that it is measurement command, and the program proceeds with the following step S702. If the judgement is that it is not measurement command, the program proceeds with another command subroutine 2 since it is further different command (step S80: Detailed explanation is omitted since it is not related to the point of the present invention.).

When the program enters in step S702, the measurement control portion 110 communicates with the micro-leukocytometer 17 side, and judges as to whether or not measurement ID is input. The measurement ID is comprised of the product ID input by the above-mentioned [① Input of products ID] and another measurement conditions (input in the micro-leukocytometer 17 in advance). When the judgement is that the products ID has not yet been input and then, the measurement ID has not been yet input, error processing is performed (step S703) since measurement can not be executed. Then, the program gets out of the subroutine.

The products ID is input by [① Input of products ID] here, and the judgement is that the products ID is input. Then, the program proceeds with step S704. That is, the measurement control portion 110 judges as to whether or not the products ID has been measured by referring to table TB. This judgement is executed on the basis of measurement flag (mentioned hereinafter) provided in table TB. When the judgement is the products ID has been already measured in step S704, error processing is performed (step S703) since it is not necessary to execute measurement. Then, the program gets out of the subroutine.

When the judgement is the products ID has not yet been measured in step S704, the measurement flag of the record having the corresponding products ID in table TB is made "1" which shows "already measured" ("not yet measured" is "0") by the measurement control portion 110 (step S705). Subsequently, the program proceeds with a predetermined measurement subroutine (step S900). In this measurement subroutine, for instance, the measurement control portion 110 allows the micro-leukocytometer 17 to measure.

Then, a tester operates the micro-leukocytometer 17 so as to execute predetermined measurement. The measurement result is properly displayed and recorded on the micro-leukocytometer 17 or in the computer 15. After step S900, the program gets out of another command subroutine 1, and step S70 finishes, as shown in Fig.8. And, the program gets out of the command selection subroutine, and returns to step S2 from step S5, as shown in Fig.6.

Then, the measurement of one cuvette 1 finishes. Thereafter, concerning remaining cuvettes 1, a series of procedures is repeated in order in such a manner that the products ID is input in the micro-leukocytometer 17 by [① Input of products ID] and measurement is executed by [② Measurement with machine], By doing so, measurement finishes concerning all of 96 · n of cuvettes 1.

According to the present cuvette control unit 19, all of operations, such as keyboard input which has been manually executed, correspondence between cuvette ID and products ID which has been manually written, is executed by bar code system. Since the input in the computer 15 is executed by bar code, the input of ID of 10 digits including blood collecting center where blood is collected, place where blood is collected, serial number and the like as blood products ID, for instance, is made easier than manually input.

Besides, troublesome operation is unnecessary without executing troublesome operation, such as the operation of manually entry of ID number in the cuvette 1 with a marking ink, the operation of manually entry of the corresponding between the cuvette ID and the blood products ID in a notebook or the like, for many cuvettes 1. Therefore, burden of measurement operation is reduced, and mental and physical pain given to a tester is made smaller. Besides, input error and repeating the same measurement twice or more times in the past, can be avoided since input in the computer 15 is made by bar code.

Even if a tester takes out the cuvette 1 regardless of the order so as to register and to measure, results of registration and measurement can be obtained so as to correctly correspond to each other without checking a notebook or the like since the correspondence is performed by the computer 15 (But, ID in cuvette box and the products ID should be simultaneously registered at the time of registration.).

Furthermore, bar code table of bar code command is prepared in addition to bar code of ID number for the bar code input system of the present cuvette control unit 19. Then, necessary many commands, such as registration, measurement, storing of measuring result, storing of image data, printing, setting of various values, referring to help, are possible without using a keyboard or a mouse. Therefore, a tester can measure only with the bar code reader 14 without input by a keyboard or a mouse, without passing thing from one hand to the other.

In another embodiment, another bar code reader can be provided with the portion of the micro-leukocytometer 17 where the cuvette 1 is set. Firstly, the cuvette box ID is read in advance so as to set an optional cuvette 1 on the measurement machine 17. Then, ID in cuvette box read by the bar code reader in the measurement machine 17 is searched by the computer 15 and products ID is obtained so as to start measurement. After measurement, product ID and measurement result are input in the computer 15, corresponding to each other. By operating as mentioned before, the burden of a tester in measurement operation can be further decreased.

Ninety six (96) of cuvettes 1, for instance, are entered in the cuvette box 6. Then, Ninety six (96) of kinds of the identification information INF, for instance, are necessary for the cuvette 1 to prepare (to produce). In case where forty (40) cuvettes 1, for instance, are entered in the cuvette box 6, the cuvettes 1 can be identified and controlled by preparing (producing) forty kinds of identification information INF for the cuvettes 1. On this occasion, the number of the cuvette identification information INF is four (4) kinds of code for controlling×ten (10) kinds of data code (0-9)= fourty (40) kinds if either of start code and stop code of code for controlling is produced as code for information. Then, forty (40) cuvettes 1 can be identified and controlled. That is, forty (40) or less cuvettes 1 can be identified and controlled if one of both stating code S and stop code P is used without using both.

In case where the cuvettes 1 have different size and shape, and 1600 cuvettes capable of affixing five digits of bar code thereon are identified, for instance, the number of the cuvette identification information INF is 4 kinds (a-d) of start code S × 100 kinds of data code I (0-99) × 4 kinds of stop code (a-d) = 1600 kinds, then 1600 cuvettes can be identified and controlled by making the digit of the code for information of the bar code five digits (characteres) in total adding two digits. Therefore, for instance, 160 or more and 1600 or less cuvettes can be identified and controlled by making the bar code five digits (characters).

The present invention is explained on the basis of the embodiment heretofore. The embodiments which are described in the present specification are illustrative and not limiting. The scope of the invention is designated by the accompanying claims and is not restricted by the descriptions of the specific embodiments. Accordingly, all the transformations and changes belonging to the claims are included in the scope of the present invention.

## Claims

1. Cuvette control unit for controlling cuvettes by reading a first bar code affixed on said cuvette, said first bar code being comprised of codes for controlling located on both end portions and code for information located between said codes for controlling, said cuvette control unit comprising:
a first reading means capable of reading said first bar code;
a cuvette identification information producing means for producing cuvette identification information corresponding to said cuvette on which said first bar code is affixed from said code for controlling and said code for information of said first bar code read by said first reading means; and
a memory means for storing said cuvette identification information produced by said cuvette identification information producing means, corresponding to said cuvette on which said first bar code is affixed.

2. The cuvette control unit as set forth in claim 1, wherein said cuvette identification information producing means produces said cuvette identification information corresponding to said cuvette on which said first bar code is affixed from start code of said codes for controlling and said code for information.

3. The cuvette control unit as set forth in claim 1, wherein said cuvette identification information producing means produces said cuvette identification information corresponding to said cuvette on which said first bar code is affixed from stop code of said codes for controlling and said code for information.

4. The cuvette control unit as set forth in claim 1, wherein said cuvette identification information producing means produces said cuvette identification information corresponding to said cuvette on which said first bar code is affixed from start code of said codes for controlling and stop code of said codes for controlling and said code for information.

5. The cuvette control unit as set forth in claim 1, wherein said first bar code is comprised of said codes for controlling comprised of start code and stop code, one digit of said code for information and one digit of code for inspection.

6. The cuvette control unit as set forth in claims 1 through 5 for controlling a plurality of said cuvettes stored in a cuvette box on which a second bar code is affixed, wherein a second reading means capable of reading said second bar code is provided, a cuvette box identification information producing means for producing cuvette box identification information corresponding to said cuvette box, on which said second bar code is affixed, from said second bar code read by said second reading means is provided, and a storing control means for storing said cuvette identification information corresponding to said cuvette stored in said cuvette box, on which said second bar code is affixed, read by said second reading means, produced by said cuvette identification information producing means, and said cuvette box identification information produced by said cuvette box identification information producing means, corresponding to each other in said memory means is provided.

7. Controlling method, comprising:
storing corresponding relation information between blood products information obtained by a third bar code affixed on a blood products storing means storing blood products and said cuvette identification information of said first bar code affixed on said cuvette obtained by said cuvette control unit as set forth in claims 1 through 6 in said memory means, when said blood products is processed using said cuvettes; and
controlling said blood products by said cuvette identification information.
